(19) Europäisches Patentamt
European Patent Office
Office européen des brevets

(11) Publication number: **0 208 405**
**A1**

(12) **EUROPEAN PATENT APPLICATION**

(21) Application number: 86304093.7

(22) Date of filing: 29.05.86

(51) Int.Cl.⁴: C 01 B 6/24
C 01 B 3/00

(30) Priority: 31.05.85 FR 8508210

(43) Date of publication of application:
14.01.87 Bulletin 87/3

(84) Designated Contracting States:
AT BE CH DE FR GB IT LI LU NL SE

(71) Applicant: The British Petroleum Company p.l.c.
Britannic House Moor Lane
London EC2Y 9BU(GB)

(84) Designated Contracting States:
BE CH DE GB IT LI LU NL SE AT

(71) Applicant: Société Française des Petroles BP
10, quai Paul Doumer
F-92412 Courbevoie Cédex(FR)

(84) Designated Contracting States:
FR

(72) Inventor: Barbaux, Yolande Société Française des Pétroles BP
10 Quai Paul Doumer
F-02412 Courbevoie Cedex(FR)

(72) Inventor: Marcq, Jean P. Société Française des Pétroles BP
10 Quai Paul Doumer
F-02412 Courbevoie Cedex(FR)

(72) Inventor: Diaz, Henri The British Petroleum Company p.l.c.
Chertsey Road
Sunbury-on-Thames Middlesex, TW16 7LN(GB)

(72) Inventor: Pinabiau, Maryse Société Française des Pétroles BP
10 Quai Paul Doumer
F-02412 Courbevoie Cedex(FR)

(74) Representative: Fawcett, Richard Fennelly et al,
BP INTERNATIONAL LIMITED Patents Division Chertsey Road
Sunbury-on-Thames Middlesex, TW16 7LN(GB)

(54) **Rare earth oxyhydrides and processes for their production.**

(57) The invention provides oxyhydrides of rare earths of the formula:

$$RE_{1-q}G_qNi_{5-p}M_pO_yH_x \quad (I)$$

in which RE designates a rare earth, G designates thorium or yttrium; q designates zero or a number less than 1; p designates zero or a number less than 5, M designates Cu, Mn, Al, Fe, Cr or Co, y designates 0.4 to 6.5; x designates a number equal to or less than 15.

A first preparation of these compounds comprises in the first stage several hydriding/dehydriding cycles, followed by static compression in the presence of hydrogen, by raising the temperature to a value below 450°C, and finally the abrupt oxidation of the hydrides prepared in this way.

A second preparation starts with a solution comprising soluble salts of nickel and the other metallic element(s) thermally decomposable to their oxides, followed by precipitation, partial or total decomposition and finally reduction.

A third preparation comprises several hydriding/dehydriding cycles, oxidation and finally reduction.

EP 0 208 405 A1

# RARE EARTH OXHYDRIDES AND PROCESSES FOR THEIR PRODUCTION

The present invention relates to rare earth oxyhydrides and processes for their production.

It is known that the rare earth elements (RE) form intermetallic compounds, hereinafter to be referred to as ICREs, which may be used as catalysts in a variety of chemical reactions. A large number of ICREs are known.

Recently, a new class of ICREs in which the rare earth element is associated with nickel has been discovered. These ICREs include $LaNi_5$, $LaNi_2$ and $CeNi_5$. $LaNi_5$ was used by Coon et al, J. Phys. Chem., 1976, 80, 1878 for the conversion of carbon monoxide/hydrogen mixtures into methane at a temperature above 225°C. According to an article by W.E. Wallace in Chemtech, December 1982, pages 752 to 754, $LaNi_5$ acts as a catalyst in its oxidised form in which nodules of nickel of a small diameter are to be found in an $La_2O_3$ support. Wallace distinguishes between three types of catalyst obtained from $LaNi_5$, viz:-

(a) type O obtained by calcining $La_2O_3$ by the wet route,

(b) type I obtained by oxidising $La_2O_3$ by synthesis gas, i.e. mixtures of gases essentially comprising carbon monoxide and hydrogen, and

(c) type II obtained by oxidising $La_2O_3$ by means of oxygen.

These oxidised catalysts of Type O, I and II make it possible to produce methane from synthesis gas.

The aforesaid ICREs can fix hydrogen in a reversible manner, under moderate conditions of temperature and pressure giving rise

to hydrides, see for example GB-A-1546612. These hydrides are known basically in three forms, viz. the alpha phase containing less than 1 hydrogen atoms per crystallographic lattice, the beta phase containing 6 to 7 atoms of hydrogen per crystallographic lattice and the mixture of the alpha and beta phases. ICRE hydrides of the aforesaid type have been used as hydrogenation catalysts, in particular for the synthesis of ammonia (see Takeshita T, Wallace W.E., Craig R.S. in J. Catal., 1976, 44, 236).

During the course of our research on catalysts we have produced suprisingly hydrides of oxidised ICREs, hereinafter to be referred to as oxyhydrides, which compounds are believed to be novel.

Accordingly, the present invention provides rare earth oxyhydrides of the formula (I):

$$RE_{1-q}G_qNi_{5-p}M_pO_yH_x \qquad (I)$$

wherein RE is a rare earth element or a mixture of rare earth elements,

G is either Th and/or Y,

M is at least one of Cu, Mn, Al, Fe, Cr or Co,

q is zero or a number less than 1,

p is zero or a number less than 5,

y is an integer or decimal number from 0.4 to 6.5, and

x is an integer or a decimal number equal to or less than 15.

By rare earth elements is meant the elements from lanthanum (Atomic No. 57) to lutetium (Atomic No. 71), and mixtures thereof. Amongst such mixtures, a mixture generally referred to as Mischmetal (Mm), which is a mixture of rare earth elements of a composition depending upon the supplier, is preferred. The most common Mischmetal comprises rare earth elements in the proportion (by weight):- La 23%, Ce 47%, Pr 5%, Nd 18%, the remainder of the mixture up to 100% consisting of other rare earth elements. Attention is drawn to the high content of Ce in the aforesaid mixture.

In the formula (I), y is an integer or decimal number preferably in the range from 1 to 3.5 and x is an integer or

decimal number preferably in the range from 1 to 8.

Amongst the preferred rare earth oxyhydrides are those of the formulae (II) to (VII) as follows:

$$MmNi_5O_yH_x \qquad (II)$$

wherein Mm is a Mischmetal,

$$CeNi_5O_yH_x \qquad (III)$$

$$CeNi_{5-k}M_kO_yH_x \qquad (IV)$$

$$Ce_{1-s}Ni_5G_sO_yH_x \qquad (V)$$

$$MmNi_{5-k}M_kO_yH_x \qquad (VI)$$

and $$Mm_{1-s}Ni_5G_sO_yH_x \qquad (VII)$$

In the formulae (II) to (VII) above, G, M, y and x have the meanings assigned above, k is zero or an integer or a decimal number less than 5 and s is zero or a number less than 1.

The rare earth oxyhydrides according to the present invention may also be supported. Suitable supports include alumina, silica-alumina, carbon, and the like.

In another aspect the present invention also provides processes for the production of rare earth oxyhydrides of the formula (I).

One process for the production of a rare earth oxhydride of the formula (I) comprises:

subjecting in a first stage an intermetallic compound of the formula (VIII):

$$RE_{1-q}G_qNi_{5-p}M_p \qquad (VIII)$$

in a closed reactor, preferably an autoclave, to a plurality of hydriding/dehydriding cycles, the hydriding being performed under a hydrogen pressure of from 20 to 200, preferably from 100 to 150 bar and at a temperature of from 20°C to below 450°C and the dehydriding being performed in the same closed reactor at a temperature in the range from 20 to 450°C;

in a second stage proceeding to static compression under an atmosphere of hydrogen by raising the temperature incrementally until a pressure in the range from 5 to 25 MPa (50 to 250 bar) is attained, and

in a third stage performing a limited oxidation by bringing the compound obtained in the second stage into contact with an

oxygen-containing gas or a gaseous oxidant at a temperature in the range from ambient to less than 450°C for a period of about 4 hours to about 200 hours.

In the first stage of the aforesaid process the hydriding is performed under a hydrogen pressure of from 20 to 200 bar, preferably from 100 to 150 bar and at a temperature of from 20°C to below 450°C. The hydrogen pressure may be maintained by compensating for the quantity of hydrogen absorbed by the alloy.

To effect dehydriding, the closed reaction vessel may suitably be placed under vacuum and re-heated to the temperature at which hydriding was performed, i.e. a temperature in the range from 20°C to below 450°C. After the second hydriding cycle, the fixation of hydrogen is easier and the pressure may be decreased. The hydriding/dehydriding may suitably be performed on alloys in lump or block form, which thereafter disintegrate. The specific surface area of the powder formed is observed to increase with the number of hydriding/dehydriding cycles. It is preferred to perform from 4 to 20 cycles.

In the second stage the operation known as static compression is effected. This operation probably increases the active surface area of the material. Typically, the powder obtained in the first stage is subjected to a hydrogen pressure of from 50 to 250 bar for a period sufficient to achieve pressure stabilisation, which may be several hours. The temperature is raised incrementally, for example by increments of 25°C every 20 minutes, up to a maximum temperature which may reach a temperature below 450°C, depending on the nature of the alloy employed. Thus, for example, for $LaNi_5$ the static compression corresponds to a maximum temperature of 150 to 250°C and a pressure of 150 to 200 bar. In the case of $MmNi_5$, the maximum temperature varies from 200 to 400°C and the hydrogen pressure from 140 to 250 bar approximately. In this way an ICRE hydride of the beta phase is obtained, that is to say a hydride rich in hydrogen.

The equilibrium pressure at the compression stages depends on the nature of the hydride in question.

In the third stage, typically an abrupt decompression of the

closed reactor is effected, placing it in communication with an oxygen-containing gas or a gaseous oxidant, at a temperature which is that of maximum compression, that is to say which may vary from 150 to 450°C. This temperature may be termed the initial temperature (To). Oxidation is effected at a temperature in the range from ambient to 450°C, preferably from 20 to 400°C. In other words, the hydride obtained in the second stage is either allowed to cool in contact with the oxygen-containing gas or gaseous oxidant at ambient temperature or else the aforesaid gas is heated to a temperature below 450°C. The final temperature ($T_f$) is the temperature at the end of the oxidation treatment which lasts from about 4 hours to about 200 hours, preferably from 24 to 132 hours.

The oxygen-containing gas may be richer or poorer in molecular oxygen than air. Thus, there may be used, for example, oxygen or air, preferably air. Other gaseous oxidants may be employed if desired.

The quantity of oxygen fixed, that is to say the value of y in formula (I) varies from about 0.7 to about 3 depending on the temperature of the oxidation stage. Generally, the value of y increases with the temperature at which the oxidation is performed. Thus, for example, for $LaNi_5$ y is approximately 0.7 to 0.8 when the air used as oxidant is at a temperature from 20 to 25°C; y has a value of about 1.9 when the temperature of the air used as oxidant is about 300°C. When the air temperature is raised to 500°C, combustion with complete oxidation is achieved in the space of 3 hours and the value of y is then about 6.5.

A second process for the production of rare earth oxyhydrides of the formula (I) comprises:

in a first step forming a solution comprising soluble salts of nickel and the other metallic element(s) thermally decomposable to the oxides thereof in such proportions as to satisfy the stoichiometric relationship of formula (I),

in a second step precipitating a mixture of the thermally decomposable salts of nickel and the other metallic element(s),

in a third step partially or wholly thermally decomposing the

mixture of heat decomposable salts obtained in the second step, and

in a fourth step reducing the product obtained in the third step in the presence of hydrogen.

As regards the first step, the solution may suitably be formed by dissolving the salts of the metals thermally decomposable to their oxides in appropriate proportions in a suitable solvent, for example water. A preferred method of forming the solution, however, comprises reacting the rare earth intermetallic compound with a suitable acid. In this manner the solution so-obtained has the stoichiometry dictated by the formula (I). A preferred salt thermally decomposable to the oxide is the nitrate, though other salts may be employed. Thus it is preferred, in the preferred method of performing step (I) to react the ICRE with aqueous nitric acid.

Precipitation of a mixture of the thermally decomposable salts may be achieved in a variety of ways. A suitable method is to evaporate the solution until the salts precipitate out. It is preferred, thereafter, to dry the precipitate so-obtained. This step may suitably be effected in the presence of a support, for example alumina, silica-alumina, carbon, or the like. In this way it has been found possible to produce, for example, $LaNi_5O_{1.7}H_{10}$ supported on alumina.

In the third step the mixture of heat decomposable salts is partially or wholly decomposed. Partial decomposition may suitably be achieved in the case of nitrate salts, for example, by calcination at a temperature in the range from 300 to 800°C for a period sufficient to achieve partial decomposition, e.g. 15 hours. Total decomposition may suitably be achieved by calcination at 800°C for a period sufficient to achieve total decomposition, e.g. 15 hours.

In the fourth step the product obtained in the third step is reduced in the presence of hydrogen under appropriate conditions, for example at 300°C under atmospheric pressure.

The oxyhydride obtained by calcination at 400°C (i.e. still containing some nitrates) and subsequent reduction at 300°C under

hydrogen at atmospheric pressure conformed to the stoichiometry:

$$MmNi_5O_{1.7-w}(NO_3)_{2w}H_x$$

This stoichiometry was calculated by mass balance from thermogravimetric data. This oxyhydride is somewhat unique in that it has a specific surface area of approximately $20m^2/g$, whilst the oxyhydrides prepared by other methods generally have surface areas of less than $10m^2/g$.

A third process for the production of rare earth oxyhydrides of the formula (I) comprises:

in a first stage subjecting an intermetallic compound of the formula (VIII) in a closed reaction vessel, preferably an autoclave, to a plurality of hydriding/dehydriding cycles, the hydriding being performed under a hydrogen pressure of from 20 to 200, preferably from 100 to 150 bar and at a temperature of from 20°C to below 450°C and the dehydriding being performed in the same closed reactor at a temperature in the range from 20 to 450°C;

in a second stage oxidising the hydride of the intermetallic compound obtained in the first stage, and

in a third stage chemically reducing the product obtained in the second stage to produce the rare earth oxyhydride.

The first stage may suitably be operated in the manner as described previously for the first stage of the first process for the production of the rare earth oxyhydrides of the invention.

The second stage may suitably be accomplished by heating the intermetallic compound hydride from the first stage in the presence of a gaseous oxidant, for example air, suitably in a muffle furnace or tube furnace with a current or $O_2/N_2$ for 15 hours at 400°C.

The oxidised product from the second stage may suitably be reduced in a batch reactor or under a flow of $H_2$ at atmospheric pressure and at 300°C.

The invention will now be further illustrated by reference to the following Examples in which the ICRE is either $LaNi_5$ or $MmNi_5$.

The following Table shows respectively:

- the ICRE employed as initial material for the preparation of the oxyhydride;

(HY-STOR, designates the supplier of $MmNi_5$ and $LaNi_5$);

- the characteristics of the three stages in the preparation of the oxyhydride.

TABLE

| Example No. Initial ICRE | Process of Preparation of the Oxhydride |
|---|---|
| 1<br>$MmNi_5$<br>"HY-STOR" | 1. Hydriding/dehydriding, 4 cycles at 400°C, 10 MPa (100 bars).<br>2. Static compression at 14 MPa (140 bars)<br>3. Oxidation 132 hours<br>initial temperature: 200°C<br>final temperature: 25°C |
| 2<br>$MmNi_5$<br>"HY-STOR" | 1. Hydriding/dehydriding, 4 cycles at 400°C 15 MPa (150 bars)<br>2. Static compression (200 bars)<br>3. Oxidation: 72 hours<br>initial temperature: 100°C<br>final temperature: 25°C |
| 3<br>$LaNi_5$<br>"HY-STOR" | 1. Hydriding/dehydriding, 4 cycles at 25°C and 4 MPa (40 bars)<br>2. Static compression 20 MPa (200 bars)<br>3. Oxidation: 90 hours<br>initial temperature: 220°C<br>final temperature: 25°C |

Example 4

PREPARATION OF AN OXYHYDRIDE FROM A HYDRIDE

The hydride was produced starting from the alloy $MmNi_5$. The hydriding was performed in 5 cycles at 400°C and under 150 bars.

The compound obtained was $MmNi_5H_6$.

This hydride was then oxidised under air (muffle furnace or tube furnace with a current of $O_2/N_2$) for 15 hours at 400°C.

The compound became $MmNi_5O_{6.76}$.

This oxide was then reduced in a batch reactor or under a flow of $H_2$ at atmospheric pressure and at 300°C. There was obtained the oxyhydride $MmNi_5O_{1.76}H_8$.

**Example 5**

**PREPARATION OF AN OXHYDRIDE FROM NICKEL NITRATE AND RARE EARTHS**

This method is based on the production of a solution of nickel nitrates and rare earths.

Two possibilities exist:

1. Making a solution of the salts in question, adhering to stoichiometry so as to obtain a ratio of Ni:Mm = 5.
2. By attacking metallic $MmNi_5$ with $HNO_3$ (in this way one obtains good stoichiometry direct).

The nitrates solution was then concentrated by evaporating the solution (approximately 80°C) until the nitrates precipitated out. The precipitate was then dried and partially decomposed under a hood ($NO_2$ given off). The black residue was then calcined at 400°C (15 hours).

If one wants to ensure total oxidation, that is to say total elimination of the nitrates, it is necessary to calcine the precipitate at 800°C (15 hours). In all cases reduction under $H_2$ at 300°C under atmospheric pressure gave an oxhydride.

The oxyhydride prepared by calcination at 400°C and subsequent reduction at 300°C under hydrogen at atmospheric pressure (still having some nitrates) gave stoichiometry of $MmNi_5O_{1.7-w}(NO_3)_{2w}H_8$.

This oxyhydride has the peculiar feature of having a specific surface area of approximately 20 $m^2/g$, whilst the oxhydrides prepared by other methods always gave specific surface areas of less than 10 $m^2/g$.

Moreover, this oxyhydride proved very active in the hydrogenation of isoprene.

Claims:

1 Rare earth oxhydrides of the formula:

$$RE_{1-q}G_qNi_{5-p}M_pO_yH_x \qquad (I)$$

wherein RE is a rare earth element or a mixture of rare earth elements,
G is either Th and/or Y,
M is at least one of Cu, Mn, Al, Fe, Cr or Co,
q is zero or a number less than 1,
p is zero or a number less than 5,
y is an integer or decimal number from 0.4 to 6.5, and
x is an integer or a decimal number equal to or less than 15.

2 Rare earth oxyhydrides according to claim 1 wherein y is an integer or decimal number in the range from 1 to 3.5 and x is an integer or decimal number in the range from 1 to 8.

3 Rare earth oxyhydrides according to claim 1 wherein q = p = o and the formula (I) is written $RENi_5O_yH_x$.

4 Rare earth oxyhydrides according to any one of claims 1 to 3 wherein RE is Mischmetal (Mm).

5 Rare earth oxyhydrides according to any one of claims 1 to 3 wherein RE is cerium.

6 Rare earth oxhydrides of the formula:

$$CeNi_{5-k}M_kO_yH_x \qquad (IV)$$

wherein k is zero or an integer or decimal number less than 5, and y and x have the meanings given in claim 1.

7 Rare earth oxhydrides of the formula:

$$Ce_{1-s}Ni_5G_sO_yH_x \qquad (V)$$

wherein G, y and x have the meanings given in claim 1, and s designates zero or a number less than 1.

8 Rare earth oxhydrides of the formula:

$$MmNi_{5-k}M_kO_yH_x \quad (VI)$$

wherein Mm designates Mischmetal, k is zero or an integer or decimal number less than 5, M, y and x have the meanings given in claim 1.

9 Rare earth oxyhydrides of the formula:

$$Mm_{1-s}Ni_5G_sO_yH_x \quad (VII)$$

wherein Mm designates Mischmetal, s is zero or a number less than 1, and G, x and y have the meanings given in claim 1.

10 Rare earth oxyhydrides according to any one of the preceding claims supported on a support.

11 A process for the production of a rare earth oxhydride of the formula (I) which comprises:

subjecting in a first stage an intermetallic compound of the formula (VIII);

$$RE_{1-q}G_qNi_{5-p}M_p \quad (VIII)$$

in a closed reactor, preferably an autoclave, to a plurality of hydriding/dehydriding cycles, the hydriding being performed under a hydrogen pressure of from 20 to 200, preferably from 100 to 150 bar and at a temperature of from 20°C to below 450°C and the dehydriding being performed in the same closed reactor at a temperature in the range from 20 to 450°C;

in a second stage proceeding to static compression under an atmosphere of hydrogen by raising the temperature incrementally until a pressure in the range from 5 to 25 MPa (50 to 250 bar) is attained, and

in a third stage performing a limited oxidation by bringing the compound obtained in the second stage into contact with an oxygen-containing gas or a gaseous oxidant at a temperature in the range from ambient to less than 450°C for a period of about 4 hours to about 200 hours.

12 A process according to claim 11 wherein in the third stage the limited oxidation is performed using air as the oxidant.

13 A process for the production of rare earth oxhydrides of the formula (I) which comprises:

in a first step forming a solution comprising soluble salts of nickel and the other metallic element(s) thermally decomposable to the oxides thereof in such proportions as to satisfy the stoichiometric relationship of formula (I),

in a second step precipitating a mixture of the thermally decomposable salts of nickel and the other metallic element(s),

in a third step partially or wholly thermally decomposing the mixture of heat decomposable salts obtained in the second step, and

in a fourth step reducing the product obtained in the third step in the presence of hydrogen.

14 A process according to claim 13 wherein the solution comprising salts of nickel and the other metallic element(s) thermally decomposable to their oxides is formed by reacting an intermetallic compound of the formula (VIII) with aqueous nitric acid.

15 A process according to either claim 13 or claim 14 wherein the mixture of heat decomposable salts obtained in the second step is partially decomposed.

16 A process according to claim 15 wherein partial decomposition is effected by calcination at 400°C for 15 hours.

17 A process for the production of rare earth oxyhydrides of the formula (I) which comprises:

in a first stage subjecting an intermetallic compound of the formula (VIII) in a closed reaction vessel, preferably an autoclave, to a plurality of hydriding/dehydriding cycles, the hydriding being performed under a hydrogen pressure of from 20 to 200, preferably from 100 to 150 bar and at a temperature of from 20°C to below 450°C and the dehydriding being performed in the same closed reactor at a temperature in the range from 20 to 450°C,

in a second stage oxidising the hydride of the intermetallic compound obtained in the first stage, and

in a third stage chemically reducing the product obtained in the second stage to produce the rare earth oxyhydride.

European Patent Office

# EUROPEAN SEARCH REPORT

0208405
Application number

EP 86 30 4093

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | GB-A-1 546 612 (UNITED KINGDOM ATOMIC ENERGY AUTHORITY) * Claims 1,4,6-8; page 3, left-hand column, lines 51-59 * --- | 11 | C 01 B 6/24<br>C 01 B 3/00 |
| A | CHEMICAL ABSTRACTS, vol. 100, no. 14, 2nd April 1984, page 191, abstract no. 106630d, Columbus, Ohio, US; L. SCHLAPBACH et al.: "Surface segregation in lanthanum-nickel-aluminum (LaNi5-xAlx). Optimization of the cyclic life time for impure hydrogen storage", & HYDROGENE MATER. CONGR. INT. 3rd 1982, 1, 131-6 * Abstract * --- | | TECHNICAL FIELDS SEARCHED (Int. Cl 4) |
| A | CHEMICAL ABSTRACTS, vol. 94, no. 4, 23rd February 1981, page 687, abstract no. 57244c, Columbus, Ohio, US; M.E. KOST et al.: "Stabilization of hydrides of intermetallic compounds", & DOKL. AKAD. NAUK SSSR 1980, 254(5), 1134-6 * Abstract * --- -/- | | B 01 J 23/00<br>C 01 B 6/00<br>C 01 B 3/00 |

The present search report has been drawn up for all claims

| Place of search | Date of completion of the search | Examiner |
|---|---|---|
| THE HAGUE | 10-09-1986 | SCHUT, R.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

European Patent Office

# EUROPEAN SEARCH REPORT

0208405

Application number

EP 86 30 4093

Page 2

| DOCUMENTS CONSIDERED TO BE RELEVANT | | | CLASSIFICATION OF THE APPLICATION (Int. Cl.4) |
|---|---|---|---|
| Category | Citation of document with indication, where appropriate, of relevant passages | Relevant to claim | |
| A | US-A-4 323 482 (A.B. STILES et al.) * Column 2, line 54 - column 3, line 6; examples 1,2; claims 1,4 * ----- | 13 | |
| | | | TECHNICAL FIELDS SEARCHED (Int Cl.4) |

The present search report has been drawn up for all claims

| Place of search | Date of completion of the search | Examiner |
|---|---|---|
| THE HAGUE | 10-09-1986 | SCHUT,R.J. |

CATEGORY OF CITED DOCUMENTS

X particularly relevant if taken alone
Y particularly relevant if combined with another document of the same category
A technological background
O non-written disclosure
P intermediate document

T : theory or principle underlying the invention
E : earlier patent document, but published on, or after the filing date
D : document cited in the application
L : document cited for other reasons

& : member of the same patent family, corresponding document